# EUROPEAN PATENT APPLICATION

(11) **EP 1 986 428 A1**
(43) Date of publication of application: **29.10.2008**
(21) Application number: 07714150.5
(22) Date of filing: 14.02.2007
(51) Int. Cl.: H04N 5/66, G09G 3/20, G09G 3/36, G09G 5/00

(54) **DISPLAY CONTROL DEVICE AND DISPLAY CONTROL METHOD**

(30) Priority: 14.02.2006 JP 2006036844
(71) Applicant: Sony Corporation, Minato-ku Tokyo 108-0075 (JP)
(72) Inventor: MATSUBAYASHI, Kei, c/o SONY CORPORATION, Tokyo 108-0075 (JP)
(74) Representative: Melzer, Wolfgang
(86) International application number: PCT/JP2007/052597
(87) International publication number: WO 2007/094351

(57) **Abstract**

Disclosed is a display control device **characterized by** means 1 for converting a supplied video signal into a video signal having a higher frame rate, means 2 for displaying two or more frames as one group of the video signal having a higher frame rate converted in partial region of the screen for individual frames of the group, and designating non-display regions of the individual frames in the group so that the video image is displayed in an entire region of the screen by combining all the frames of the group, means 3 for masking the non-display region designated by the means 2 for individual frames of the video signal having a higher frame rate, and means 4 for driving a display means 6 and displaying the video image masked by the means 3. The display device is thus capable of preventing copyright protected video data from being copied by imaging the screen image of the video data at low cost.

## Description

### TECHNICAL FIELD

The present invention relates to a display control device and a method of controlling display in order to prevent copyright-protected video data, and the like from being copied illegally by capturing an image displayed on a screen.

### BACKGROUND ART

Analogue image data recorded on a video tape, optical disk, or hard disk generally deteriorate if data are copied; however, with digital data, errors of the image can be corrected and hence the data can be copied without deterioration. Consequently, unnecessarily strict copyright protection is generally applied to contents of the video image distributed as a package medium such as a DVD, and delivered via a network, or digital video data such as digital broadcasting.

As a copyright protection method, a process in which data is encrypted when stored and communicated, so that the data cannot be decrypted without a key although the data is obtained by the third person; and a process in which electronic watermark is embedded in the data, so that an origin of the data can be traced back if the data is ever used.

However, there is a case in which the copyright-protected video data is illegally copied by capturing a video image displayed on a screen (hereinafter, called "copying by capturing a screen image") using an image capture device, such as a CCD camera.

Generally, a video image is displayed via a cathode-ray tube by sequentially scanning electronic beams vertically and horizontally in one frame along signals of an analogue broadcasting wave, and one frame may form wave ripples having the same luminance in the horizontal and vertical directions according to beam scanning when capturing an image with the CCD camera. However, the video image can be obtained by capturing a screen image if such periodical waves may be included in the captured image. In a motion picture projector, a film is projected with light emitted from a light source, and hence the video image can be captured with image drops due to the presence of time lags between displaying the number of frames (24p) of the film and imaging the number of frames of the CCD camera. Further, in a liquid crystal display and a plasma display, the video image can be obtained by capturing a screen image similar to the above-described method, since the video image is imaged similar to the case using the motion picture projector when light is emitted simultaneously from the whole screen, and the video image is captured with ripples similar to the image obtained via the cathode-ray tube when light is sequentially emitted from a backlight and the like.

However, in the above-described cases, i.e., protecting the data with encryption, it is not possible to protect the video image if once ever displayed on the screen, despite the fact that the video image is internally protected in a system. Specifically, a video image subject to digital broadcasting, and the like, has high resolution and clear image in comparison to an analogue video image; however, it is possible to copy a video image without much deteriorating image quality since the image-capturing ability of the CCD camera has been improved.

Further, if protecting the data using electronic watermark, the complete original digital data cannot always be obtained if the video image is imaged as described above since the video image may have periodic ripples and image drops; and even the size of the video image may vary with an angle and distance of the camera that captures images. As a result, detecting the electronic watermark will be difficult since the electronic watermark contained in a frequency component of the video image and the like cannot be located.

Thus, as the copyright protection method, using encryption and electronic watermark may be vulnerable to copying by capturing a screen image.

Accordingly, video images for display have been provided with watermark by the application of an infrared ray or ultraviolet ray, for example. Since electronic watermark is not visible to the human naked eye but is visible if only the video image is copied by capturing a screen image with an image capture device, such as the CCD camera (Patent Reference 1). However, with this method, a device for displaying the copyright protection information using the infrared ray and ultraviolet ray may have to be prepared, and thus the cost of the method may result in high.

[Patent Reference 1] Published Japanese Patent Application No. 2005-26759 (Paragraph No. 0024, FIG. 3)

### DISCLOSURE OF THE INVENTION

In view of the problems described above, an object of the present invention is to prevent copyright-protected video data, and the like from being copied by capturing a screen image at low cost.

In order to solve the above-described problems, a display control device of the present invention is characterized by including a frame rate converter configured to convert a supplied video signal into a video signal having a higher frame rate by generating interpolated frames from the supplied video signal, a region designation portion configured to display two or more frames as one group of the converted video signal having a higher frame rate in partial region of the screen for individual frames of the group, and designating non-display regions of the individual frames in the group so that the video image is displayed in an entire region of the screen by combining all the frames of the group, and a masking portion configured to mask the non-display regions designated by the region designation portion for individual frames of the video signal having a higher frame rate, and a display driver configured to drive a display means and displaying the video image masked by the masking portion.

Further, according to a display control device of the present invention is characterized by including a first step of converting a supplied video signal into a video signal having a higher frame rate by generating interpolated frames from the supplied video signal, a second step of displaying two or more frames as one group of the converted video signal having a higher frame rate at the first step in partial region of the screen for individual frames of the group, and designating non-display regions of the individual frames in the group so that the video image is displayed in an entire region of the screen by combining all the frames of the group, and a third step of masking the non-display region designated at the second step for individual frames of the video signal having a higher frame rate converted at the first step, and a fourth step of driving a display means and displaying the video image masked at the third step.

According to the present invention, a supplied video signal is converted into a video signal having a higher frame rate. Two or more frames are then displayed as one group of the converted video signal having a higher frame rate in partial region of the screen for individual frames of the group, and non-display regions of the individual frames in the group are designated so that the video image is displayed in an entire region of the screen by combining all the frames of the group. Further, the non-display regions designated in the frames of the converted video signal having a higher frame rate for each group are masked, so that the masked video signal is displayed by driving a display means.

If an image displayed on the display means is observed by the human naked eye in this manner, individual frames of the video image (image having non-display regions) in one group will not separately be discriminated due to afterimage of a human visual characteristic, but all the frames of the video image in one group, or the complete video image will simultaneously be recognized.

However, when capturing a screen image of the display means with the image capture device, such as CCD cameras, part of the frame of a video image in one group, or the image having non-display region is imaged within one imaging frame due to the relation in time between a frame rate of the video image and shutter speed of the image capture device.

Thus, the video image copied by capturing the screen image has an inferior quality and thus has no commercial value, and it is possible to prevent copying the video image by capturing a screen image. Further, unlike the method that required displaying copyright information with infrared rays, or the like, as described in the patent document 1, copying by capturing a screen image can be protected simply with signal processing such as converting a signal into a signal having a higher frame rate, designating non-display region, or masking at lower cost.

The display device is thus capable of preventing copyright protected video data from being copied by capturing a screen image of the original video data at low cost.
According to an embodiment of the present invention, it is possible to obtain such an effect that the re-photography of the copyright protected video data and the like can be prevented at low cost.

### BRIEF DESCRIPTION OF DRAWINGS

FIG. 1 is a block diagram showing a configuration example of an essential portion of a display device according to an embodiment of the present invention;
FIGS. 2A to 2D are diagrams showing examples in which a video signal having frame rate of 60 fps is converted into video signals having a higher frame rates;
FIGS. 3A to 3E are diagrams showing examples of shapes representing non-display regions and display regions of mutually complementary frames of the same groups;
FIGS. 4A to 4C are diagrams showing examples of how mutually complementary frames of the same groups are selected;
FIG. 5 is a diagram showing an example of a relation between a frame rate of a video signal and a shutter speed of a CCD camera;
FIGS. 6A to 6D are diagrams showing examples of how a display drive circuit determines timing to display mutually complementary frames;
FIG. 7 is a diagram showing an outline illustrating respective steps corresponding to units of the display device of FIG. 1; and
FIG. 8 is a diagram showing modified examples of mutually complementary frames.

### BEST MODE FOR CARRYING OUT THE INVENTION

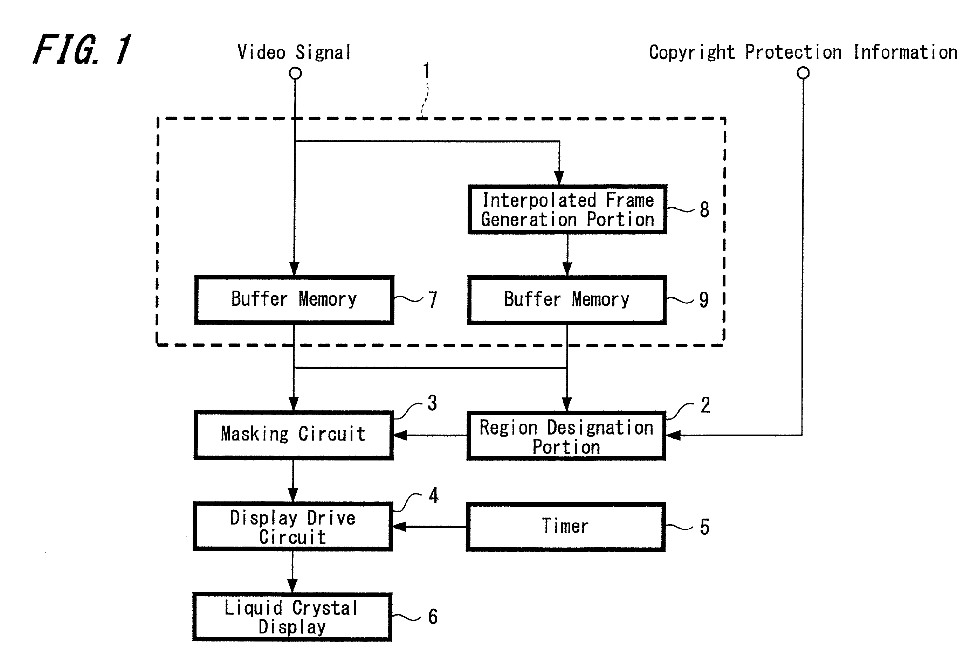

Hereinafter, preferred embodiments of the present invention are more specifically described by referring to accompanied drawings. FIG. 1 is a block diagram showing a configuration example of a major portion of a display device to which an embodiment of the present invention is applied. The display device may reproduce and display a video image recorded on a packaged medium, such as a DVD, and may receive a video content distributed via a network and display the video image; or the display device may be a television receiver, insofar as the display device is configured to include a frame rate converter 1, a region designation unit 2, a masking circuit 3, a display drive circuit 4, a timer 5 and a liquid crystal display 6 as related elements according to an embodiment of the present invention. The frame rate converter 1 includes a buffer memory 7 configured to store a plurality of frames of supplied video data, an interpolated frame generator 8, and a buffer memory 9 configured to store a plurality of frames of interpolated frames.

In the frame rate converter 1, video signals having prescribed frame rate; in other words, a video signal reproduced by the DVD player or the signal received via the network, or a digital broadcasting signal selected on a basis of frequency, demodulated, descrambled, demultiplexed, and decoded are input per frame, are sequentially stored on the buffer memory 7, and are simultaneously supplied to the interpolated frame generator 8.

The interpolated frame generator 8 generates interpolated frames that interpolate the supplied plurality of frames, and induces the generated interpolated frames to be sequentially stored on the buffer memory 9. While reading out adjoining two frames of the video data from the buffer memory 7, the interpolated frame to be inserted between the two frames is read out from the buffer memory 9, so that the input video signals having a higher frame rate than the prescribed frame rate are outputted from the frame rate converter 1.

As a method of generating a interpolated frame for converting a signal into a signal having a higher frame rate, there is provided a known method in which interpolated vector is generated using motion vector information generated by a decoder (not shown) that decodes a compressed video signal. The interpolated frame generator 8 may also employ such a method.

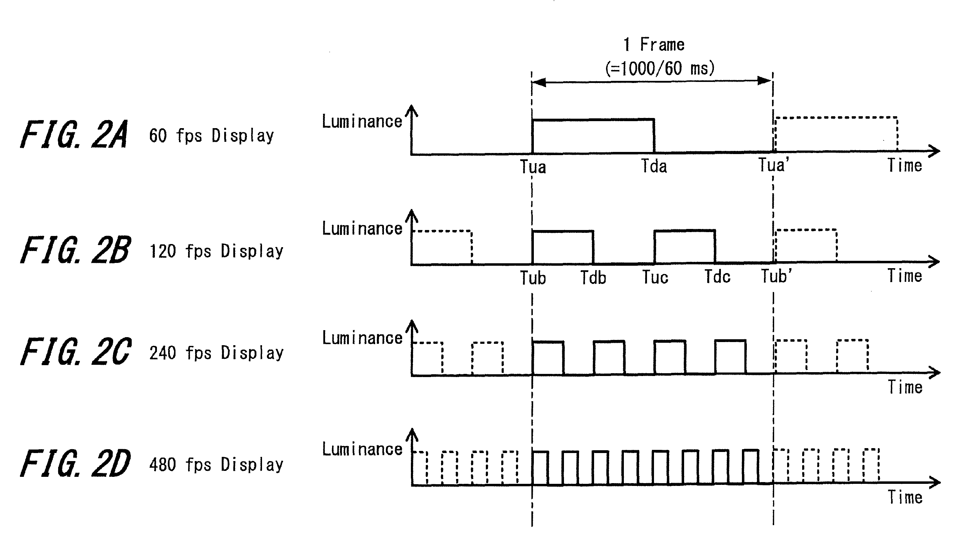

FIGS. 2A to 2D are diagrams showing examples of respective video signals having a higher frame rates converted from a video signal having frame rate of 60 fps (frame/second). As shown in FIG. 2A, the video having 60 fps includes one light-on period (Tua to Tda) and one light-off period (Tda to Tua') for one frame (1000/60 msec) in order to prevent blurring that may occur in moving images. In a case of converting the video having frame rate of 60 fps into a video having a higher frame rate of 120 fps, one frame having 60 fps may be subdivided into two frames, each having one light-on period (Tub to Tdb, and Tuc to Tdc) and one light-off period (Tdb to Tuc, and Tdc to Tub') as shown in FIG. 2B. In a case of converting the video signal of 60 fps into higher frame rates of 240 fps and 480 fps, one frame of 60 fps may also be subdivided into three and four frames, each having one light-on period and one light-off period as shown in FIG. 2C and FIG. 2D.

The following description illustrates a case where the frame rate converter 1 converts a video signal having frame rate of 60 fps into a video signal having a higher frame rate of 240 fps as shown in FIG. 2C.

As shown in FIG. 1, the video signal converted into the video signal to display at a higher frame rate of 240 fps is supplied from the frame rate converter 1 to the region designation portion 2 and the masking circuit 3, respectively. If data of which the video signal is supplied to the frame rate converter 1 is copyright-protected, the information on the copyright protected data is supplied to the region designation portion 2. In a case where the copyright protection information is recorded on the package medium, such as a DVD, the information may be reproduced from the package medium and then supplied to the region designation portion 2. If, on the other hand, the copyright protection information is contained in the video content delivered via the network or in a data packet of the digital broadcasting signal, the information be reproduced therefrom and supplied to the region designation portion 2.

The region designation portion 2 designates a region of the screen in the frame on which a video image is displayed. The region designation portion 2 includes a microprocessor and designates the non-display region of the video based on methods such as (a) and (b) shown below, if the copyright protection information is contained in the data, according to an embodiment of the present invention. If, on the other hand, the copyright protection information is not provided to the data, non-display region is not designated.

(a) The two frames of the higher frame rated video signal of 240 fps are selected as one group (what time-positional relation the two frames include to be selected as one group will be described later).

(b) An video image is merely displayed on part of the region on the screen in one frame, whereas the video image is displayed on the remaining part of the region on the screen in the other frame; specifically, the non-display region and display region of the video image are alternately located between the two frames, so that the video image is displayed on an overall region of the screen by combining the two frames. Notice that the two frames of the same group are called "mutually complementary frames", hereinafter.

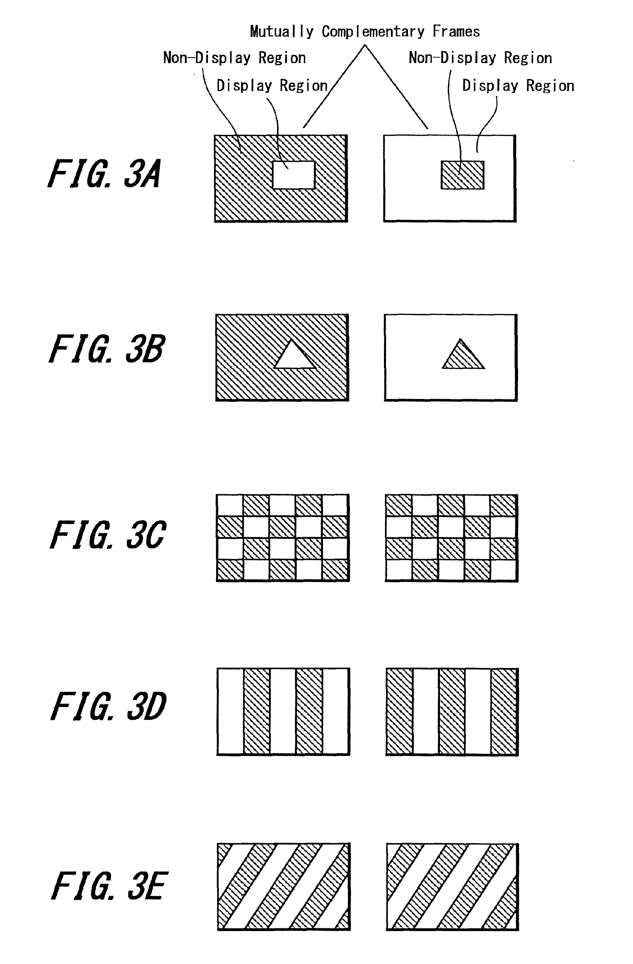

FIG. 3A to FIG. 3E are diagrams respectively showing how the non-display region (shaded portion) and display region (blank portion), each designating the mutually complementary frames of each group in (b), are represented.

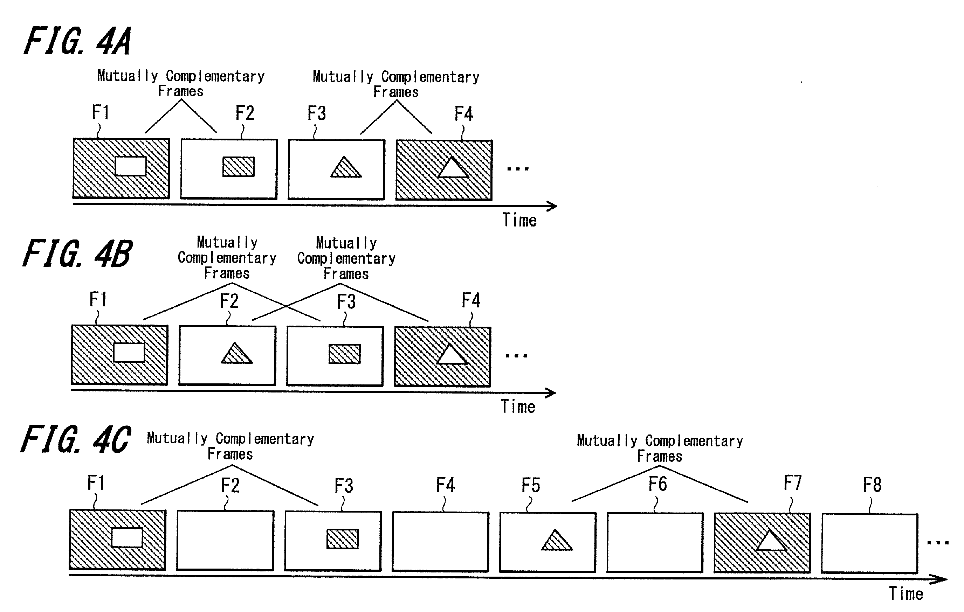

Subsequently, what time-positional relation the two frames include to be selected as one group (as the mutually complementary frames) in (a) will be described. FIG. 4A to FIG. 4C are diagrams showing methods of selecting the respective two frames with the non-display region (shaded portion) and display region (blank portion) designated in (b).

In accordance with the method illustrated in FIG. 4A, consecutive frames per adjoining two frames of the video signal having a higher frame rate of 240 fps, such as F1 and F2, and F3 and F4 are respectively selected as mutually complementary frames (the adjoining mutually complementary frames respectively designate different non-display regions represented by different shapes).

In accordance with the method illustrated in FIG. 4B, mutually complementary frames are alternately located and independently selected per four consecutive frames of the converted video signal having a higher frame rate of 240 fps; for example, the frames F1, F3, and F2, F4 respectively represent mutually complementary frames in four consecutive frames (the mutually complementary frames respectively designate the different non-display regions represented by different shapes).

In accordance with the method illustrated in FIG. 4C, two mutually complementary frames are alternately located and independently selected per four consecutive frames of the converted video signal having a higher frame rate of 240 fps; for example, frames F1 and F3 in four consecutive frames, F5 and F7 in other four consecutive frames are respectively selected as the mutually complementary frames; and the mutually complementary frames respectively designate the different non-display regions represented by different shapes. Further, the frames F2, F4, and F6 are interposed between the mutually complementary frames and do not designate the non-display region of the video image. Specifically, the frames having time intervals therebetween are selected from the consecutive frames of the video signal having a higher frame rate as at least one frame of the same group, and the frames interposed between the frames having time intervals therebetween do not designate the non-display region of the video image.

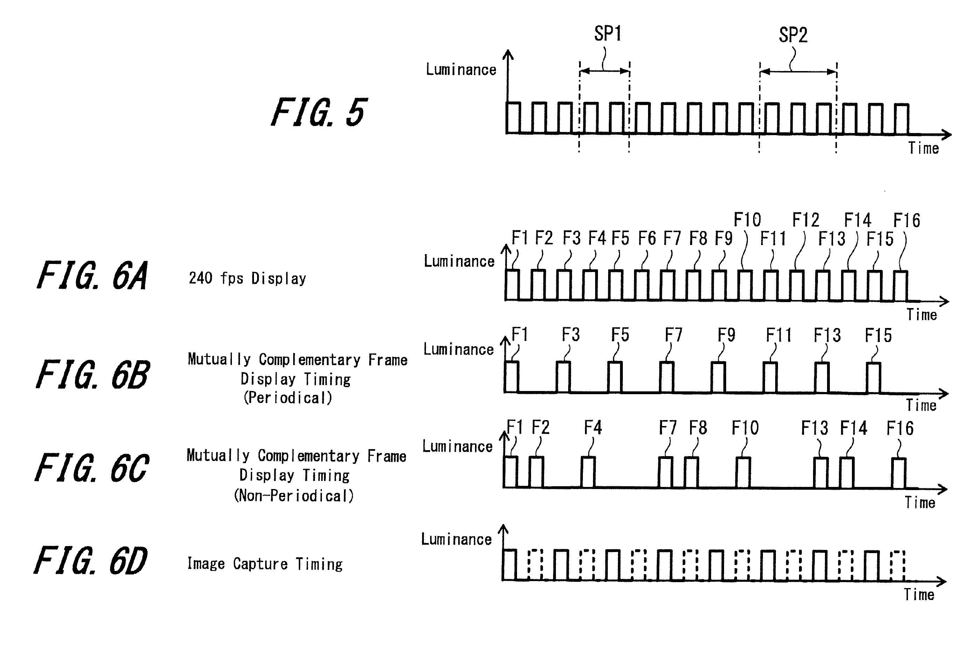

In the methods of FIG. 4B and FIG. 4C, the interval of time between one frame and one remaining frame in the mutually complementary frames of the same group gets larger than those obtained in the method of FIG. 4A. Therefore, even in a case where the shutter speed of the CCD camera (time to accumulate an electric charge after a signal is discharged by an electronic shutter) is as long as a time taken for two frames of the video signal having 240 fps as represented by SP1 in FIG. 5, for example, capturing video images having the mutually complementary frames of the same group in one image capture frame may be prevented (in other words, it is possible to capture the video image having one of the mutually complementary frames of the same group, more specifically, to capture the video image having the non-display region).

Further, the mutually complementary frames of different types are alternately selected for every six frame in consecutive frames as shown in the method of FIG. 4B, and when an every third frame of the video signal is selected as a mutually complementary frame in the method of FIG. 4C, capturing video images having the mutually complementary frames of the same group in one image capture frame may be prevented as represented by SP2 in FIG. 5 although the shutter speed of the CCD camera is as long as a time taken for two frames of the video signal having 240 fps.

Here, the following description is based on the assumption in which the region designation portion 2 selects the frames having time intervals therebetween as the mutually complementary frames illustrated by a example in FIG. 4C.

As shown in FIG. 1, the region designation information indicating the non-display region for each frame designated in this manner is supplied from the region designation portion 2 to the masking circuit 3. As one example of a masking portion, the masking circuit 3 masks the non-display region designated by the region designation portion 2 based on the region designation information for the individual frame of the video signal of 240 fps that is supplied from the frame rate converter 1.

The video signal of 240 fps masked by the masking circuit 3 is supplied to the display drive circuit 4. As one example of a display drive portion, the display drive circuit 4 drives the liquid crystal display 6 based on time information supplied from the timer 5 such that the video image of each frame of the video signal supplied from the masking circuit 3 is displayed.

FIGS. 6B and 6C are diagrams showing embodiments of a method of setting timing at which the display drive circuit 4 causing the video images of the mutually complementary frames to be displayed on the liquid crystal display 6 based on a relation between the frame rate of the video signal of 240 fps (FIG. 6A) and image capturing time of the CCD camera (FIG. 6D (here, the shutter speed of each image capturing time is determined as the duration exceeding a range of one frame of the video signal of 240 fps)).

In the method of FIG. 6B, the every other frames of the video signal of 240 fps, which are frames F1 and F3, frames F5 and F7, frames F9 and F11, frames F13 and F15, ---, are respectively selected as the mutually complementary frames in a manner similar to the method shown in FIG. 4C, so that each frame of F1, F3, F5, F7, F9, F11, F13, F15, --- included in the mutually complementary frames is having periodical time interval (the frame rate of 120 fps).

On the other hand, in the method of FIG. 6C, which frame to be selected as the mutually complementary frames is determined by selecting a period represented by a range between 0 frame and 2 frames each time, such that the frames of the video signal of 240 fps, which are frames F1 and F2, frames F4 and F7, frames F8 and F10, frames F13 and F14, ---, are selected as the mutually complementary frames (the non-display region of the video is not designated to the frames between the frames having time intervals therebetween selected as the mutually complementary frames, which are frames of F3, F5, F6, F9, F11, F12, F15, ---). Thus, each frame of F1, F2, F4, F7, F8, F10, F13, F14,included in the mutually complementary frames is having non-periodic time interval (time interval randomly selected from 1/240 sec, 1/120 sec and 1/80 sec at each time).

Here, in a case that the image capturing time determined by the image capture device, such as the CCD camera, matches with an image capturing time of the mutually complementary frames F1, F3, F5, F7, --- as illustrated with a solid line in FIG. 6D, the video image having only one of the mutually complementary frames is captured (the complete video image is not captured) of all the image capture frames in the method of FIG. 6B. However, in a case where the image capturing time matches with the image capturing time of the frames (frames without non-display region) F2, F4, F6 --- other than the mutually complementary frames as illustrated with a broken line in FIG. 6D, the complete video image is captured of all the image capture frames.

On the other hand, since the image capturing time matches with the image capturing time of the frames F1, F2, F4, F7, F8, F10, F13, F14, --- included in the mutually supplementary frames and also matches with the image capturing time of the other frames F3, F5, F6, F9, F11, F12, F15, --- than the mutually complementary frames in the case of the method of FIG. 6C, it is possible to make the video of only one frame in the mutually complementary frames photographed in a considerable number of image capture frames (stochastically somewhere about one half of image capture frames) irrespective of the image capturing time.

The display drive circuit 4 makes the video of each frame of the video signal of 240 fps displayed on the liquid crystal display 6 by using the method shown in FIG. 6C.

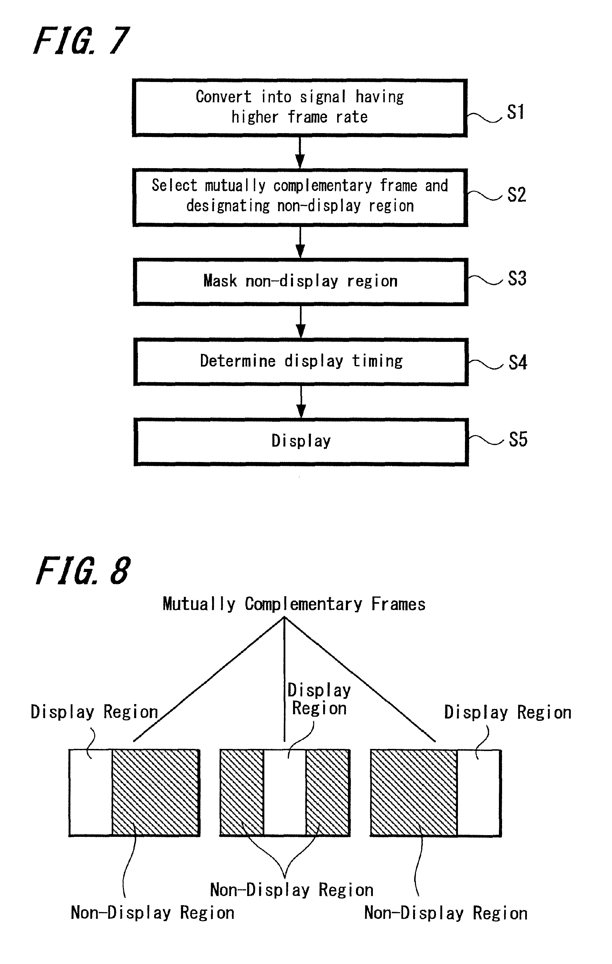

FIG. 7 is a flow chart illustrating an outline of processing of each portion of the above-described display device in FIG. 1. In a case where the supplied video signal is converted into a video signal having a higher frame rate with the frame rate converter 1 (step S1) provided with the copyright protection information, the mutually complementary frames are selected and the non-display regions are designated by the region designation portion 2 (step 2) for the video signal having a higher frame rate and the non-display regions of the mutually complementary frames are masked by the masking circuit 3 (step S3).

While setting the display timing of the mutually complementary frames by the display drive circuit 4 as shown in FIG. 6C (step S4), each frame of the video signal having a higher frame rate is displayed on the liquid crystal display 6 (step S5).

In a case where the video image displayed on the liquid crystal display 6 of the display device obtained via performing such processing is observed with the human eyes, the video image is not recognized as the individual frames (video image having the non-display region) of the mutually complementary frames; however, is recognized as an entire video image produced by a combination of the two frames of the mutually complementary frames; more specifically, as a complete video image without non-display region, due to having converted the video image into a video signal having a higher frame rate and the effect of afterimage of the human visual feature. Further, since the time interval for displaying the two frames included in one group of mutually complementary frames is set at 1/80 sec at a maximum (1/60 sec or less indicating the time interval for causing the adjoining two frames to be displayed in the original video signal having 60 fps before the video signal is converted into a video signal having a higher frame rate) as shown in FIG. 6C, the video image is not recognized as the individual frames of the mutually complementary frames at that point.

However, in a case where the screen image of the liquid crystal display 6 is copied with the image capture device, such as the CCD camera, the video image having only one of the mutually complementary frames, which is the video image having the non-display region, is imaged in one image capture frame due to the relation between the frame rate of the video signal and the shutter speed of the image capture device and the relation in time between the frame of the video signal and the image capture frame of the image capture device.

Specifically, since the method of setting a long time-interval between one frame and the one remaining frame of the mutually complementary frames of the same group as illustrated in FIG. 4C is used as a method of selecting mutually complementary frames, capturing video images having mutually complementary frames of the same group in one image capture frame may be prevented although a long duration is set for the shutter speed of the CCD camera.

Further, since each frame is having non-periodic time-interval as illustrated in FIG. 6C, capturing a video image having only one of the mutually complementary frames of the considerable number of image capture frames irrespective of the image capturing time of the CCD camera.

Consequently, since the video image is degraded when the video image that is copied by capturing a screen image with the image capture device is displayed, illegally copying the original video data protected by the copyright by capturing the screen video image can be prevented. Further, copying the original video image by capturing the screen video image may be prevented using signal processing only at low cost, such as processing of a signal converting into a signal having a higher frame rate, designating a non-display region and masking; and therefore, the device for displaying copyright information with infrared rays may not be required.

Moreover, since the non-display region is not designated in the region designation portion 2 in a case where the supplied video signal is not protected by the copyright (if the copyright protection information is not provided), the video can be displayed in an ordinary manner.

### [Modified embodiment]

Last, the following items (1) to (7) illustrate modified embodiments described above.

(1) As described hereinbefore, in a case where a longer duration is set for the shutter speed of the CCD camera (duration of two or more frames of the video signal), capturing video images having mutually complementary frames of the same group in one image capture frame may be prevented according to a method of selecting mutually complementary frames shown in FIG. 4B. Moreover, in a case where not so long duration is set for the shutter speed of the CCD camera (exceeding a range of one frame of the video signal), capturing video images of the mutually complementary frames of the same group in one image capture frame may be prevented according to a method of selecting mutually complementary frames shown in FIG. 4A. Therefore, the mutually complementary frames may be selected in the region designation portion 2 using the methods shown in FIG. 4A and FIG. 4B.

(2) In a case where a display frame rate does not match with an image capturing frame rate, the video image having only one of the mutually complementary frames is captured in the considerable number of image capture frames although the liquid crystal display 6 is driven such that each frame is displayed periodically as shown in FIG. 6B. Therefore, the liquid crystal display 6 may be driven by the display drive circuit 4 according to the method shown in FIG. 6B.

(3) In the region designation portion 2, the non-display region may be formed with a shape of character indicating that the copyright is protected.

(4) A circuit detecting luminance or color of a video signal, or a circuit recognizing an image may be provided in the region designation portion 2 such that a portion having high luminance is designated as the non-display region of one frame of the mutually complementary frames; a portion of a specific color (e.g., flesh color) is designated as a non-display region of one frame of the mutually complementary frames; and a portion of a face detected by the image recognition is designated as a non-display region of one frame of the mutually complementary frames. In other words, the video image is not completely unshown in the non-display region but is displayed so that the video image in part of the non-display region is discriminated from the remaining portions of the entire screen.

(5) In the region designation portion 2, three or more frames of the video signal having a higher frame rate are selected as one group (mutually complementary frames). In each frame of the group, the video image is displayed in one portion of the screen. Non-display regions of individual frames may be designated in the respective groups, so that the video image is displayed in an entire region of the screen by combining all frames of the respective groups. FIG. 8 shows an example in which video image display regions (shaded portion) and non-display regions (blank portion) are designated in respective frames by selecting three frames as mutually complementary frames.

(6) In the region designation portion 2, mutually complementary frames are selected and non-display regions are designated on a constant basis, regardless of whether or not the video image is copyright protected.

(7) A display (display means) that is driven by the display drive circuit 4 is not limited to a liquid crystal display; however, any suitable devices that will not display partial regions of the frames may be employed, such as a cathode-ray tube display, plasma display, rear projection display, GxL, and organic EL display.

### [DESCRIPTION OF REFERENCE NUMERALS]

1. Frame Rate Converter, 2. Region Designation portion, 3. Masking Circuit, 4. Display Drive Circuit, 5. Timer, 6. Liquid Crystal Display, 7. Buffer Memory, 8. Interpolated Frame Generator, 9. Buffer Memory

## Claims

1. A display control device **characterized by** comprising:
a frame rate converter configured to convert a video signal into a video signal having a higher frame rate by gnerating an interpolated frame from the supplied video signal,
a region designation portion configured to display two or more frames as one group of the video signal having a higher frame rate converted by the frame rate converter in partial region of the screen for individual frames of the group, and to designate non-display regions of the individual frames in the group so that the video image is displayed in an entire region of the screen by combining all the frames of the group,
a masking portion configured to mask the non-display regions designated by the region designation portion in the individual frames of the video signal having a higher frame rate converted by the frame rate converter, and
a display driver configured to drive a display means and display the video signal masked by the masking portion.

2. A display control device according to claim 1, **characterized in that:**
the region designation portion designates two frames as one group of the video signal having a higher frame rate converted by the frame rate converter such that a display region and non-display region of the video image in one frame and a display region and non-display region of the video image in the other frame are alternately switched.

3. A display control device according to claim 1, **characterized in that:**
the region designation portion designates consecutive frames of the video signal having a higher frame rate converted by the frame rate converter such that one frame of the one group and one frame of the other frame and are alternately selected and include non-display regions having mutually different shapes.

4. A display control device according to claim 1, **characterized in that:**
the region designation portion selects every other frames having time interval therebetween from consecutive frames as at least one frame of the one group, and does not designate a non-display region for frames interposed between the every other frames.

5. A display control device according to claim 1, **characterized in that:**
the display driver drives the display means and displays each frame of the video image masked by a masking portion at non-periodic intervals.

6. A display control device according to claim 1, **characterized in that:**
the region designation portion designates a non-display region of the video image when information indicating that the supplied video signal is copy-protected is provided, and does not designate the non-display region when the information is not provided.

7. A method of controlling a display **characterized by** comprising the steps of:
a first step of converting a video signal into a video signal having a higher frame rate by generating an interpolated frame from a supplied video signal;
a second step of displaying two or more frames as one group of the video signal having a higher frame rate converted at the first step in partial region of the screen for individual frames of the group, and designating non-display regions of the individual frames in the group so that the video image is displayed in an entire region of the screen by combining all the frames of the group,
a third step of masking the non-display regions designated at the second step in the individual frames of the video signal having a higher frame rate converted at the first step, and
a fourth step of driving a display means and displaying the video signal masked at the third step.
